# EUROPÄISCHE PATENTSCHRIFT

(11) **EP 2 848 902 B1**
(45) Veröffentlichungstag und Bekanntmachung des Hinweises auf die Patenterteilung: **20.06.2018**
(21) Anmeldenummer: 14182432.6
(22) Anmeldetag: 27.08.2014
(51) Int. Cl.: G01F 23/00, G01F 23/284

(54) **Verfahren zur Bestimmung eines Füllstandes eines Mediums und Vorrichtung zur Bestimmung eines Füllstandes eines Mediums**
Method for determining a fill level of a medium and device for determining a fill level of a medium
Procédé de détermination d'un niveau de remplissage d'un milieu et dispositif de détermination d'un niveau de remplissage d'un milieu

(30) Priorität: 05.09.2013 DE 102013014689; 22.11.2013 DE 102013019524
(43) Veröffentlichungstag der Anmeldung: 18.03.2015
(73) Patentinhaber: Krohne Messtechnik GmbH, 47058 Duisburg (DE)
(72) Erfinder: Bilgic, Attila, 40880 Ratingen (DE); Gerding, Michael, 44805 Bochum (DE)
(74) Vertreter: Gesthuysen Patent- und Rechtsanwälte

(56) Entgegenhaltungen:
- WO-A1-2012/089438
- DE-A1-102004 041 857
- DE-A1-102009 042 869

## Beschreibung

Die Erfindung betrifft ein Verfahren zur Bestimmung eines Füllstands eines Mediums nach dem Radar-Prinzip. Weiterhin bezieht sich die Erfindung auf eine Vorrichtung zur Bestimmung eines Füllstands eines Mediums nach dem Radar-Prinzip.

In der industriellen Messtechnik werden Radarfüllstandmessgeräte eingesetzt, um Füllstande von Medien wie beispielsweise Flüssigkeiten, Schüttgütern oder auch Schlämmen innerhalb von Behältern wie Tanks oder Silos oder auch im Freiraum zu bestimmen. Der Behälter kann dabei zumindest teilweise geschlossen oder zumindest teilweise offen sein und zumindest teilweise aus Metall, Kunststoff, Keramik oder sonstigen Materialien oder Materialkombinationen bestehen. Das bei der Messung umgesetzte Laufzeitverfahren basiert darauf, dass die Laufstrecke eines elektromagnetischen Signals gleich dem Produkt aus Laufzeit und Ausbreitungsgeschwindigkeit ist.

Für die Messung werden elektromagnetische Signale - insbesondere Mikrowellensignale - in Richtung auf die Oberfläche des Mediums abgestrahlt und nach einer Reflektion als sogenannte Echosignale empfangen. Die Antenne, die dem Aussenden der Signale als Sendevorrichtung dient, ist häufig auch die Empfangsvorrichtung. Für die Auswertung der empfangenen Signale wird zumeist eine digitalisierte Hüllkurve bestimmt, die die Amplituden der Echosignale als Funktion des Abstandes "Antenne - Oberfläche des Mediums" repräsentiert. Der Füllstand ergibt sich dann aus der Differenz zwischen dem bekannten Abstand der Antenne zum Boden des Behälters und dem durch die Messung bestimmten Abstand der Oberfläche des Mediums zur Antenne.

Die Mikrowellensignale werden dabei entweder frei abgestrahlt oder werden an einem Seil oder Stab entlang geführt.

Für die Bestimmung des Füllstands ist es relevant, wie die Antenne bzw. die Sendevorrichtung relativ zur Oberfläche des Mediums orientiert ist. In den meisten Fällen findet eine lotrechte Montage der Sende- bzw. Sende-/Empfangsvorrichtung oberhalb des Mediums statt. Die elektromagnetischen Signale werden also in der Regel senkrecht zur Oberfläche des Mediums abgestrahlt.

Aufgrund besonderer Einbausituationen oder beispielsweise der Anwesenheit von Einbauten als Störelementen im Behälter, ist es gegebenenfalls erforderlich, die Antenne geneigt einzubauen.

Für solche Fälle beschreiben die Druckschriften DE 10 2004 041 857 A1 und WO 2012/089438 A1 die Verwendung von Neigungssensoren, um den Winkel zu erhalten, um den die Antenne jeweils geneigt ist. Aus trigonometrischen Zusammenhängen heraus ergibt sich dann die Strecke zwischen der Antenne und der Oberfläche des Mediums.

Der Erfindung liegt die Aufgabe zugrunde, ein Verfahren gemäß Anspruch 1 zur Füllstandsbestimmung anzugeben, das einen hohen Grad an Genauigkeit und Zuverlässigkeit aufweist. Das erfindungsgemäße Verfahren, bei dem die zuvor hergeleitete und aufgezeigte Aufgabe gelöst ist, umfasst zumindest die folgenden Schritte: Mindestens ein elektromagnetisches Signal wird für die Messung von einer Sendevorrichtung, die in einer Ausgestaltung - beispielhaft und ohne Beschränkung der Anwendbarkeit auch mit anders ausgestalteten Sendevorrichtungen - eine dielektrische Antenne ist, abgestrahlt. Mindestens ein elektromagnetisches Signal wird für die Messung empfangen. Dabei fällt die Empfangsvorrichtung in einer Ausgestaltung mit der Sendevorrichtung zusammen, so dass sich insgesamt eine Sende-/Empfangsvorrichtung ergibt. Weiterhin wird mindestens einmal eine Neigung der Sendevorrichtung relativ zum Erdschwerefeld ermittelt. Dann wird mindestens in Abhängigkeit von der ermittelten Neigung mindestens ein Bewertungswert für die Bestimmung des Füllstands ermittelt. Die Neigung wird in einer Ausgestaltung vor der Aufnahme der Messungen ermittelt, also vor dem Abstrahlen eines elektromagnetischen Signals und damit auch vor dem Empfang eines solchen Signals.

Der Bewertungswert erlaubt je nach Ausgestaltung beziehungsweise je nach Anwendungsfall eine Aussage über die gegebene Messsituation, z. B. in Bezug auf sicherheitskritische Fragestellungen. In anderen oder ergänzenden Ausgestaltungen dient der Bewertungswert zur Erhöhung der Genauigkeit der Auswertung der empfangenen Signale in Hinblick auf den Füllstand.

Aus der wenigstens einen Messung der Neigung wird also in Abhängigkeit von der jeweiligen speziellen Fragestellung eine zusätzliche Information in Form des Bewertungswerts gewonnen, die zur Verbesserung der Auswertung bzw. der Messsituation beiträgt.

In einem Beispiel ist vorgesehen, dass in dem Fall, dass die ermittelte Neigung außerhalb eines vorgebbaren Neigungsbereichs liegt, der Bewertungswert auf einen Fehlerzustand gesetzt wird. Beispielsweise ergibt sich der Neigungsbereich, innerhalb dessen der für die Neigung ermittelte Wert liegen darf, aus einem Toleranzbereich in Hinblick auf die Genauigkeit der Messung der Neigung bzw. in Hinblick auf die Möglichkeit der Genauigkeit der Einstellung der Neigung der Sendevorrichtung.

In einem anderen Beispiel wird ein fester Wert für die Neigung als Neigungsbereich vorgegeben. Beispielhaft wird insbesondere als Neigungsbereich der Wert vorgegeben, der bei einer Orientierung der Sendevorrichtung senkrecht relativ zur Oberfläche des Mediums vorliegt.

Liegt die ermittelte Neigung außerhalb des Neigungsbereichs bzw. unterscheidet sich die Neigung - ggf. abhängig von einem vorgebbaren Toleranzwert, der ggf. auch gleich Null gesetzt werden kann - von einem vorgebbaren Wert, so führt dies zu einem Fehlerzustand bzw. wird anhand der ermittelten Neigung erkannt, dass ein Fehlerzustand in Form einer falschen bzw. nicht zulässigen Ausrichtung der Sendevorrichtung vorliegt.

Der Fehlerzustand führt insbesondere in einer Ausgestaltung dazu, dass die Messung des Füllstands unterbunden bzw. blockiert wird. In einer ergänzenden oder alternativen Ausgestaltung wird eine Fehlsignalisierung - z. B. in Form eines Aufleuchtens eines Fehlersymbols oder in Form eines Fehlertons oder einer Fehlertonfolge - vorgenommen.

In einer weiteren Ausgestaltung sind folgende Verfahrensschritte vorgesehen: Mindestens in Abhängigkeit von der ermittelten Neigung und in Abhängigkeit von Daten über den Behälter werden Signalverlaufsdaten ermittelt.

Die Ermittlung der Signalverlaufsdaten besteht dabei in einer Variante in einer Berechnung nach hinterlegten Formeln oder ausgehend von hinterlegten Algorithmen. Ggf. werden auch zusätzlich zu den Daten über den Behälter, die sich insbesondere auf dessen Geometrie, aber auch auf dessen Reflektions- oder Absorptionsverhalten in Bezug auf elektromagnetische Signale beziehen, noch weitere Daten für die Berechnung verwendet.

Die ermittelten Signalverlaufsdaten beschreiben eine Ausbreitung des mindestens einen elektromagnetischen Signals im Innenraum des Behälters. Wenigstens eine Trajektorie des elektromagnetischen Signals wird also durch die Signalverlaufsdaten beschrieben.

Ausgehend von den ermittelten Signalverlaufsdaten und den Daten über den Behälter - insbesondere in Abhängigkeit von Daten über Öffnungen (beispielsweise Fenster oder Aussparungen) im Behälter - wird ein Abstrahlungsmaß ermittelt. Das Abstrahlungsmaß beschreibt dabei einen Anteil der Ausbreitung des mindestens einen elektromagnetischen Signals außerhalb des Innenraums des Behälters. Erfindungsgemäss wird also ermittelt, wie sich das elektromagnetische Signal innerhalb des Innenraums des Behälters ausbreitet. Dazu gehört auch die Auswertung der Reflektion des Signals im Innenraum des Behälters, wobei ggf. noch Einbauten im Behälter zu beachten sind. Ein Abgleich dieser Signalverlaufsdaten mit den hinterlegten Daten des Behälters erlaubt dann die Ermittlung eines Abstrahlungsmaßes, das beschreibt, welcher Anteil der elektromagnetischen Signale außerhalb des Behälters verläuft und damit in die Außenwelt um den Behälter herum gelangt. Wird beispielweise die elektromagnetische Strahlung derartig auf die Behälterwandung abgestrahlt, dass die reflektierte Strahlung auf ein Fenster in der Wandung trifft, so verlässt die reflektierte Strahlung den Innenraum des Behälters, was sich in dem Abstrahlungsmaß niederschlägt.

In einer Ausgestaltung wird bei der Ermittlung der Signalverlaufsdaten zusätzlich zur ermittelten Neigung und zusätzlich zu den Daten über den Behälter noch auf Daten über mindestens ein Objekt im Innenraum des Behälters rückgegriffen. Bei den Daten über das mindestens eine Objekt handelt es sich insbesondere um die Geometrie, die Position und ggf. auch um die Materialeigenschaften in Hinblick auf die Wechselwirkung mit elektromagnetischen Signalen.

Das Objekt im Behälter oder als Teil des Behälters ist beispielsweise ein Rührwerk, ein Einfüllstutzen, eine zusätzliche Messanordnung, eine Öffnung, ein Fenster, eine Aussparung, ein Steigeisen usw.

Für die Berechnung des Verlaufs des elektromagnetischen Signals im Innenraum des Behälters werden in dieser Ausgestaltung auch die Auswirkungen von gegenständlichen Elementen oder Lücken (ggf. auch in Bezug auf Effekte an Kanten usw.) berücksichtigt, die selbst zu Reflektionen oder zu Signal-Abschwächungen führen können.

Dabei werden in einer Ausgestaltung für die Ermittlung der Signalverlaufsdaten Reflektionen und Mehrfachreflektionen des elektromagnetischen Signals in dem Behälter - also insbesondere an dessen Innenwand oder an Aussparungen usw. - und/oder an dem mindestens einen Objekt im Innenraum des Behälters beachtet. Je nach der vorhandenen Rechenleistung wird die Berechnung der Signalverlaufsdaten mehr oder minder aufwändig bzw. komplex durchgeführt, so dass sich auch mehr oder minder genaue bzw. detaillierte Daten über die Trajektorie des elektromagnetischen Signals ergeben.

Aus den Signalverlaufsdaten wird erfindungsgemäss ermittelt, welcher Anteil an elektromagnetischen Signalen, sei es durch die direkte Signalausbreitung oder sei es in Folge von Reflektionen, außerhalb des Innenraums des Behälters verläuft bzw. den Innenraum verlässt. Insbesondere bei sicherheitskritischen Anwendungen kann es wesentlich sein, dass gewährleistet wird, dass keine Signale oder nur Signale bis zu einem vorgebbaren Grenzwert den Behälter verlassen.

Alternativ oder ergänzend wird überwacht, ob die Sende- bzw. Sende- und/Empfangsvorrichtung falsch - also z. B. nicht oder nicht vollständig in den Innenraum abstrahlend bzw. nicht lotrecht über dem Medium bzw. dessen Oberfläche angeordnet - bei der Erstinbetriebnahme montiert wird.

Die falsche Montage ist dabei bei einer der obigen Ausgestaltungen insbesondere eine Ausrichtung der Sendevorrichtung nicht mit lotrechter bzw. senkrechter oder vertikaler Abstrahlung relativ zur Oberfläche des Mediums.

Wird die Feststellung bezüglich der korrekten Ausrichtung der Sendevorrichtung - wie weiter oben beschrieben - bereits anhand der ermittelten Neigung gewonnen, so können insbesondere die zuvor beschriebenen Berechnungen und Ermittlung der Signalwege entfallen.

In einer Ausgestaltung wird in dem Fall, dass das Abstrahlungsmaß einen vorgebbaren Grenzwert überschreitet, ein Fehlerzustand erkannt. Weiterhin wird in dem Fall, dass der Fehlerzustand erkannt wird, mindestens eine Fehlersignalisierung ausgelöst.

Der Grenzwert für den Fehlerzustand hat dabei in einer Ausgestaltung den Wert Null, so dass jeglicher Austritt an Signal aus dem Innenraum als Fehlerzustand identifiziert wird.

In einer Ausgestaltung wird der Grenzwert in Abhängigkeit von der Genauigkeit der Signalverlaufsdaten und der verwendeten Rechengenauigkeit vorgegeben.

Ein Fehlerzustand ist dabei - je nach Anwendung - insbesondere auch der Fall, dass die Sendevorrichtung nicht richtig, d. h. lotrecht relativ zum Medium angeordnet ist.

Die Fehlersignalisierung besteht in einer Ausgestaltung darin, dass die Bestimmung des Füllstands unterbrochen und/oder verweigert wird. Das Feldgerät, das der Umsetzung der Füllstandsmessung nach dem Radar-Prinzip dient, verweigert in dieser Ausgestaltung in dem Fall, dass ein Fehler vorliegt, dass also ein Signal den Innenraum des Behälters verlässt, seinen Dienst. Eine Messung ist also in dieser Ausgestaltung nicht möglich, wenn sich aus dem Neigungswinkel der Antenne des Feldgeräts, aus den Daten über den Behälter und ggf. mindestens ein Objekt und aus den Berechnungen ergibt, dass wenigstens ein Teil der elektromagnetischen Signale - entweder direkt oder in Folge von wenigstens einer Reflektion - den Innenraum verlässt. Der Vorteil liegt dabei darin, dass hierfür keine Messung mit den elektromagnetischen Signalen selbst, sondern nur eine Messung der Neigung erforderlich ist. Es kann also nicht dazu kommen, dass elektromagnetische Signale den Behälter verlassen, da dies bereits vor der Füllstand-Messung verhindert wird.

In einer alternativen oder ergänzenden Ausgestaltung besteht die Fehlersignalisierung darin, dass ein Fehlersignal angezeigt wird. Insbesondere für unkritische Anwendungen wird also nicht die Messung an sich verhindert oder unterbrochen, sondern es wird angezeigt, dass ein Fehler vorliegt. Die Anzeige eines Fehlersignals ist beispielsweise relevant für die Ausrichtung der Antenne des Feldgerätes bei der Inbetriebnahme bzw. der Montage am Messort.

In einer weiteren Ausgestaltung erfährt der Bewertungswert eine weitere Bedeutung - im Gegensatz bzw. zur Ergänzung der oben beschriebenen Bewertung der Führung der elektromagnetischen Signale im Behälter.

In einer Ausgestaltung, die mit den vorhergehenden kombiniert oder separat realisiert werden kann, wird die Neigung der Sendevorrichtung relativ zum Erdschwerefeld zu einem ersten Zeitpunkt und zu einem zweiten Zeitpunkt ermittelt. Ausgehend von der zum ersten Zeitpunkt ermittelten Neigung und der zum zweiten Zeitpunkt ermittelten Neigung wird eine Orientierung einer Oberfläche des Mediums relativ zum Behälter ermittelt.

Wird der Behälter bewegt oder beispielweise gekippt, so ändert sich damit auch die Lage der Oberfläche des Mediums. Dabei wird in einer Ausgestaltung angenommen, dass die Orientierung der Sendevorrichtung, also der Antenne, dabei unverändert bleibt. Um auf die durch die Bewegung des Behälters geänderte Einstellung zwischen der Antenne und der Oberfläche des Mediums zu reagieren, wird geschlussfolgert, dass die Neigung beim zweiten Zeitpunkt sich aus der Neigung des Behälters ergibt und dass das Medium dieser Bewegung folgt. Das Medium ist dabei insbesondere fließ- oder schüttfähig und ist nicht starr.

Ausgehend von den beiden gemessenen Neigungen wird dann auf die Orientierung der Oberfläche des Mediums geschlossen, indem z. B. über geometrische Zusammenhänge eine entsprechende Umrechnung vorgenommen wird. Aus den beiden Neigungswinkeln wird also darauf umgerechnet, dass sich das Medium durch die Bewegung des Behälters unter Einwirkung der Gravitation zu den beiden Messzeitpunkten unterschiedliche im Innenraum des Behälters verteilt.

Da insbesondere die Oberfläche des Mediums der Reflektion der elektromagnetischen Signale dienen soll, wird vor allem die Orientierung der Oberfläche ermittelt und insbesondere berechnet.

In einer Ausgestaltung werden die oben besprochenen Signalverlaufsdaten mindestens in Abhängigkeit von der zum zweiten Zeitpunkt und der zum ersten Zeitpunkt ermittelten Neigung, in Abhängigkeit von der ermittelten Orientierung der Oberfläche und in Abhängigkeit von Daten über mindestens den Behälter und über mindestens ein Objekt im Innenraum des Behälters ermittelt bzw. insbesondere berechnet. Hierbei wird insbesondere die Auswirkung der geänderten Orientierung der Oberfläche des Mediums relativ zum Behälter bzw. relativ zu dem mindestens einen Objekt im Behälter für den Verlauf der elektromagnetischen Signale im Behälter berücksichtigt.

In einer Ausgestaltung dient die wenigstens zweifache Messung der Neigung dem Ziel zu erkennen, ob die Sendevorrichtung bewegt, z. B. verkippt worden ist. Daher wird in dem Fall einer Abweichung zwischen der zum ersten Zeitpunkt und zum zweiten Zeitpunkt ermittelten Neigung ein Fehlersignal erzeugt. Ist es also beispielsweise nicht möglich, dass der Behälter eine Bewegung erfährt, so kann eine Änderung der Neigung der Sendevorrichtung nur darin begründet sein, dass die Sendevorrichtung bewegt worden ist, was in dieser Ausgestaltung zu einem Fehlersignal führt.

In einer weiteren Ausgestaltung wird die Neigung der Sendevorrichtung mindestens einmal verändert, so dass Messungen mit mindestens zwei unterschiedlichen Neigungen und dadurch unterschiedlichen Ausrichtungen der Sendevorrichtung vorgenommen werden. Zu jeder Einstellung der Sendevorrichtung wird die eingestellte Neigung der Sendevorrichtung ermittelt. Die Messungen mit den unterschiedlichen Neigungen der Sendevorrichtung werden dann in Verbindung mit den ermittelten Neigungen zu einer Gesamtinformation über das Medium bzw. speziell über die Oberfläche des Mediums zusammengefügt. Durch die Änderung der Neigung der Sendevorrichtung lässt sich insbesondere eine Oberfläche des Mediums abtasten. Durch die Bestimmung der Neigung kann dabei beispielsweise ein hochgenauer Antrieb für die Einstellung der Neigung der Sendevorrichtung, d. h. für das Verkippen entfallen.

Wird in der Beschreibung auf eine Sendevorrichtung Bezug genommen, so kann es sich insbesondere auch um eine Sende-/Empfangsvorrichtung handeln, die dem Senden und Empfangen von elektromagnetischen Signalen dient. Insbesondere handelt es sich bei der Sende- bzw. Sende-/Empfangsvorrichtung um eine Antenne für Radar-Signale.

Gemäß einer weiteren Lehre bezieht es sich auf eine Vorrichtung zur Bestimmung eines Füllstands eines Mediums nach dem Radar-Prinzip mit mindestens einer mindestens ein elektromagnetisches Signal abstrahlenden Sendevorrichtung, mit mindestens einem Neigungssensor zur Ermittlung einer Neigung der Sendevorrichtung relativ zum Erdschwerefeld und mit mindestens einer Rechenvorrichtung zur Ermittlung, ob die ermittelte Neigung der Sendevorrichtung innerhalb eines vorgebbaren Neigungsbereichs liegt.

Die Aufgabe wird gemäß dieser Lehre durch eine Vorrichtung gelöst, die über eine Sendevorrichtung und einen Neigungssensor verfügt. Der Neigungssensor ist dabei in einer Ausgestaltung ein fester Bestandteil der Vorrichtung zur Bestimmung des Füllstands und ist in einer alternativen Ausgestaltung nur temporär mit der eigentlichen Messvorrichtung verbunden bzw. gekoppelt. Je nach Anwendungsfall kann der Neigungssensor bzw. dessen Funktionalität auch hinzu- oder weggeschaltet werden.

Die Vorrichtung zeichnet sich dadurch aus, dass durch den Neigungssensor die Orientierung der Sendevorrichtung ermittelt wird und dass die Rechenvorrichtung aus dem ermittelten Neigungswert ermittelt, ob die Neigung der Sendevorrichtung innerhalb eines vorgebbaren - und damit als passend definierten - Neigungsbereich liegt. Es wird also festgestellt, ob die Neigung der Sendevorrichtung innerhalb eines zulässigen Bereichs liegt. Die Rechenvorrichtung ist dabei in einer Ausgestaltung ein integraler Bestandteil der Vorrichtung und ist in einer alternativen Ausgestaltung temporär mit der Vorrichtung verbunden und ist ggf. über eine Datenverbindung - wie beispielsweise einen Feldbus - mit der Vorrichtung gekoppelt.

In einer Ausgestaltung sind der Neigungssensor und/oder die Rechenvorrichtung temporär mit der Vorrichtung verbindbar. Diese Ausgestaltung ist beispielsweise für den Fall vorteilhaft, dass bei einer Inbetriebnahme die Anbringung der Vorrichtung relativ zur Messumgebung kontrolliert werden soll. Durch diese Ausgestaltung lassen sich auch Messvorrichtungen ohne eigenen bzw. fest installierten Neigungssensor zu erfindungsgemäßen Vorrichtungen erweitern.

Die Vorrichtung erlaubt dabei auch die Realisierung der oben beschriebenen Verfahrensschritte. Dabei führt die Rechenvorrichtung ergänzend die obigen Schritte oder alternativ die obigen Verfahrensschritte aus.

In einer Ausgestaltung ist die Rechenvorrichtung derartig ausgestaltet, dass sie in dem Fall, dass die ermittelte Neigung der Sendevorrichtung außerhalb des Neigungsbereichs liegt, einen Fehlerzustand anzeigt.

In den obigen Ausführungen zum Verfahren sind bereits Beispiele für das Anzeigen bzw. Signalisieren des Fehlerzustands beschrieben worden.

In einer Ausgestaltung unterbricht bzw. blockiert insbesondere die Rechenvorrichtung den Messbetrieb der Vorrichtung zur Bestimmung des Füllstands. Alternativ oder ergänzend fragt die Rechenvorrichtung einen Bestätigungscode ab, um trotz der falschen Ausrichtung der Sendevorrichtung die Messung zu erlauben. In einer Ausgestaltung zeigt die Rechenvorrichtung den Fehlerzustand visuell über eine Anzeigeeinheit bzw. ein Display an. Alternativ oder ergänzend wird ein Fehlersignal akustisch, z. B. in Form eines Pings ausgegeben.

Für die größte Sicherheit wird jedoch die Messung zusätzlich bzw. alternativ im Falle einer Neigung der Sendevorrichtung außerhalb des zulässigen Bereichs unterbunden bzw. blockiert.

Der vorgebbare Neigungsbereich wird in der folgenden Ausgestaltung im Wesentlichen auf einen Wert bzw. einen Neigungswinkel eingeschränkt. Die Beschränkung auf einen Neigungswinkel wird in einer Ausgestaltung verbunden mit einer Art von Toleranzbreite, die sich durch die Messgenauigkeit des Neigungssensors und/oder durch die Genauigkeit der Ausrichtung der Sendevorrichtung ergibt. Daher wird also bei letzterer Ausgestaltung überprüft, ob die ermittelte Neigung im entsprechend ermittelten bzw. vorzugebenden Toleranzbereich mit dem vorgegebenen Neigungswert übereinstimmt. Beispielsweise wird daher vorgesehen, dass der Neigungsbereich einer im Wesentlichen lotrechten Abstrahlung von elektromagnetischen Signalen der Sendevorrichtung in Richtung einer Oberfläche des Mediums und/oder einer im Wesentlichen lotrechten Ausrichtung der Sendevorrichtung relativ zur Oberfläche des Mediums entspricht. Der Neigungsbereich wird in dieser Ausgestaltung also eher zu einem Neigungswert, um den in einer ergänzenden Ausgestaltung der besagte Toleranzbereich gelegt wird.

Laut der Norm ETSI EN 302 729: "Electromagnetic compatibility and Radio spectrum Matters (ERM); Short Range Devices (SRD); Level Probing Radar (LPR) equipment operating in the frequency ranges 6 GHz to 8,5 GHz, 24,05 GHz to 26,5 GHz, 57 GHz to 64 GHz, 75 GHz to 85 GHz" ist eine lotrechte Ausrichtung der Sendevorrichtung oberhalb des Mediums gefordert, um unerwünschte Abstrahleffekte aufgrund einer verkippten, also nicht richtig orientierten Antenne bei Freiraummessungen zu vermeiden.

Daher wird bei der beispielhaften Vorrichtung die Neigung der Sendevorrichtung durch den Neigungssensor ermittelt und insbesondere in Verbindung mit den obigen Ausgestaltungen hinsichtlich der zu unterschiedlichen Zeitpunkten stattfindenden Messungen der Neigung in einer Ausgestaltung sogar ständig überwacht. Im Fall der fehlerhaften Ausrichtung wird die Messvorrichtung gemäß einer Ausgestaltung insbesondere abgeschaltet.

Die Vorrichtung erlaubt daher die Sicherheit, dass nur unter normkonformer Ausrichtung der Sendevorrichtung die Messung möglich ist.

Die diskutierten Besonderheiten und Ausgestaltungen der Vorrichtung lassen sich auch entsprechend auf das oben beschriebene erfindungsgemäße Verfahren anwenden bzw. dort umsetzen.

Im Einzelnen gibt es nun eine Vielzahl von Möglichkeiten, das erfindungsgemäße Verfahren auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung einer ersten Anwendungssituation des Verfahrens bzw. der Vorrichtung,
- Fig. 2: eine schematische Darstellung einer zweiten Anwendungssituation zu einem ersten Zeitpunkt und
- Fig. 3: die zweite Anwendungssituation der Fig. 2 zu einem zweiten Zeitpunkt.

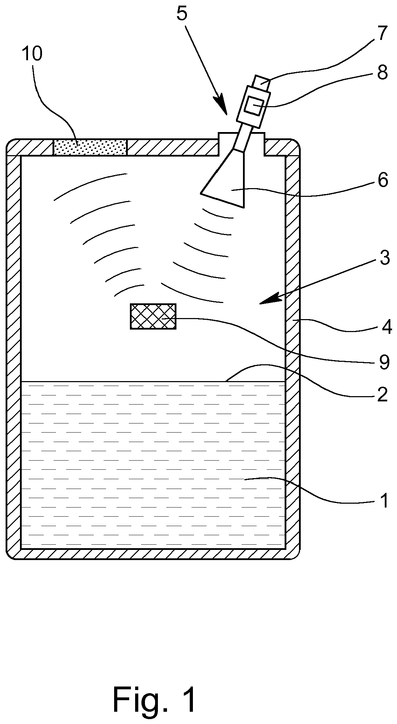

In der Fig. 1 ist schematisch eine Anwendungssituation dargestellt, in der der Füllstand eines Mediums 1 über die Reflektionen von Radar-Signalen an seiner Oberfläche 2 im Innenraum 3 des Behälters 4 ermittelt werden soll.

Für die Füllstandsmessung wird ein Messgerät 5 verwendet, das eine Sende-/Empfangsvorrichtung 6 in Form einer Hornantenne für elektromagnetische Signale aufweist.

Um die Neigung der Sende-/Empfangsvorrichtung 6 zum Erdschwerefeld zu ermitteln, ist hier ein Neigungssensor 7 vorgesehen, der je nach Ausgestaltung nur temporär oder ständig mit dem Messgerät 5 verbunden ist. Hier ist eine dauerhafte Verbindung vorgesehen, so dass der Neigungssensor 7 insbesondere auch mit der Rechenvorrichtung 8 im Messgerät 5 kontaktiert ist.

Der Neigungssensor 7 bestimmt die Neigung der Sende-/Empfangsvorrichtung 6 und erlaubt damit der Rechenvorrichtung 8, Signalverlaufsdaten für den Verlauf der elektromagnetischen Signale, die von der Sende-/Empfangsvorrichtung 6 abgestrahlt werden, innerhalb des Innenraums 3 des Behälters 4 zu ermitteln. Hierfür sind in der Rechenvorrichtung 8 Daten über den Behälter 4 und hier insbesondere auch Daten über ein Objekt 9 und über ein Fenster 10 als Teil des Behälters 4 hinterlegt. Die Daten beziehen sich dabei auf die Geometrie bzw. die Lage/Position bzw. die Materialbeschaffenheit in Bezug auf die Wechselwirkung mit elektromagnetischen Signalen.

Ausgehend von den ermittelten Signalverlaufsdaten ergibt sich beispielweiseweise, dass das elektromagnetische Signal in Folge der Reflektion an dem Objekt 9 zumindest teilweise durch das Fenster 10 hinaustritt (hier angedeutete durch die schematische Darstellung der Signale). Es ergibt sich daher auch ein Abstrahlungsmaß größer Null. Dies bedeutet, dass die elektromagnetischen Signale nicht vollständig im Innenraum 3 verbleiben, sondern den Behälter 4 verlassen.

Daher wird in der dargestellten Ausgestaltung vorgesehen, dass das Messgerät 5 die Messung des Füllstands verweigert und insbesondere keine elektromagnetischen Signale ausstrahlt. Daher kann bereits vor einer ersten Füllstandsmessung verhindert werden, dass Radar-Signale den Innenraum 3 verlassen.

Der als Teil des erfindungsgemäßen Verfahrens ermittelte Bewertungswert beschreibt in der gezeigten Situation die Abgeschlossenheit des Behälters 4 in Bezug auf die elektromagnetischen Signale und erlaubt dadurch, dass Messungen, die dazu führen, dass solche Signale auch in den Außenraum gelangen, verhindert werden. Der Bewertungswert dient daher der Sicherheit der Messungen bzw. der den Behälter 4 umgebenden Zonen bei sicherheitskritischen Anwendungen.

Die Sendevorrichtung 6 ist nicht lotrecht oberhalb der Oberfläche 2 des Mediums 1 angeordnet. Wäre daher die Messvorrichtung derartig ausgestaltet, dass die Rechenvorrichtung 8 die Neigung der Sendevorrichtung 6 dahingehend überwacht, dass die Neigung nur innerhalb eines vorgegebenen Bereichs liegt bzw. insbesondere nur der lotrechten Ausrichtung entspricht, so würde die Rechenvorrichtung 8 bei der gezeigten Ausrichtung vorzugsweise eine Blockierung der Füllstandsmessung bewirken.

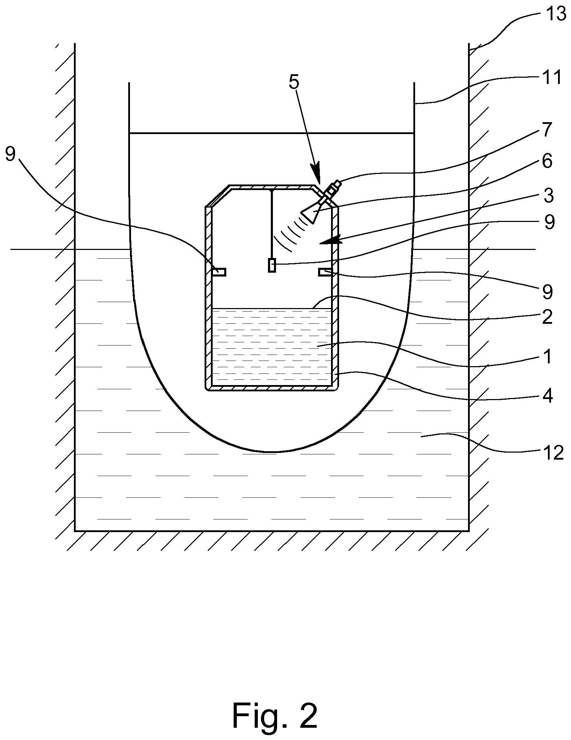

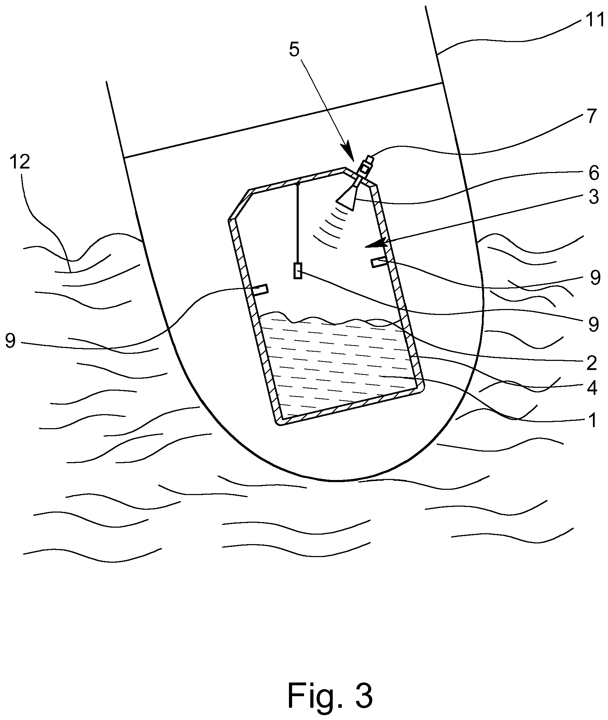

In Fig. 2 und 3 ist eine weitere Messsituation zu zwei unterschiedlichen Zeitpunkten dargestellt.

Der Behälter 4 der Fig. 2 befindet sich in einem Schiff 11, das von Wasser 12 innerhalb eines Docks 13 umgeben ist. Die Oberfläche 2 des Mediums 1 des Behälters 4 im Schiff 11 hat bei der aufrechten Position des Schiffs 11 eine erste Orientierung relativ zum Behälter 4 und ist hier insbesondere im Wesentlichen parallel zum Boden des Behälters 4.

In dem Behälter 4 befinden sich drei Objekte 9 als Einbauten. Davon sind zwei als Steighilfen an der Wandung des Behälters befestigt und ragt ein weiteres Objekt 9 an einem Seil in den Innenraum 3 des Behälters 4 hinein.

Der Neigungssensor 7 ermittelt zu dem dargestellten ersten Zeitpunkt die Neigung der Sende-/Empfangsvorrichtung 6 relativ zum Erdschwerefeld. Mit diesem Neigungswinkel und den Daten über den Behälter 4 bzw. die Objekte 9 werden hier beispielweise wie beim Beispiel der Fig. 1 zunächst die Signalverlaufsdaten und das Abstrahlungsmaß ermittelt.

Der für die gezeigte Anwendung wesentliche Bewertungswert wird in der Fig. 3 verdeutlicht.

In der Fig. 3 befindet sich das Schiff 11 auf hoher See und ist durch den Wellengang leicht geneigt.

Dem Kippen des Schiffs 11 folgt durch die Einwirkung der Gravitation auch das Medium 1 innerhalb des Behälters 4, der fest im Schiff 11 angebracht ist. Um auch in diesem Zustand den Füllstand des Mediums 1 anhand der an dessen Oberfläche 2 reflektierten elektromagnetischen Signale richtig zu ermittelt, wird über den Neigungssensor 7 zu dem dargestellten zweiten Zeitpunkt die Neigung der Sende-/Empfangsvorrichtung 6 erneut gemessen.

Da die Sende-/Empfangsvorrichtung 6 selbst fest angeordnet sein soll, sich also ihre Orientierung relativ zum Behälter 4 nicht ändert, resultiert der zu dem zweiten Zeitpunkt gemessene Neigungswinkel aus dem Verkippen des Behälters 4 bzw. des Schiffes 11 gegenüber dem Erdschwerefeld.

Daher kann der zweite Neigungswinkel dazu benutzt werden, um die Orientierung der Oberfläche 2 des Mediums 1 relativ zum Behälter 4 zu ermitteln und insbesondere zu berechnen. Bei der Berechnung wird ebenfalls auf die hinterlegten bzw. bekannten Daten über den Behälter 4 und ggf. die Objekte 9 zurückgegriffen.

Da sich durch die Neigung des Behälters 4 auch die Position der Objekte 9 im Innenraums 3 des Behälters 4 verändern können (siehe das Objekt 9 am Seil), so kann es auch unter diesen Bedingungen, d. h. zu dem zweiten Zeitpunkt erforderlich sein, die Signalverlaufsdaten neu zu berechnen.

## Patentansprüche

1. Verfahren zur Bestimmung eines Füllstands eines Mediums (1) nach dem Radar-Prinzip, wobei für die Bestimmung des Füllstands mindestens ein elektromagnetisches Signal von einer Sendevorrichtung (6) abgestrahlt und mindestens ein elektromagnetisches Signal empfangen wird, wobei mindestens einmal eine Neigung der Sendevorrichtung (6) relativ zum Erdschwerefeld ermittelt wird und wobei mindestens in Abhängigkeit von der ermittelten Neigung mindestens ein Bewertungswert für die Bestimmung des Füllstands ermittelt wird,
**dadurch gekennzeichnet,**
**dass** mindestens in Abhängigkeit von der ermittelten Neigung und in Abhängigkeit von Daten über den Behälter (4) Signalverlaufsdaten ermittelt werden, wobei die Signalverlaufsdaten eine Ausbreitung des mindestens einen elektromagnetischen Signals im Innenraum (3) des Behälters (4) beschreiben, und dass ausgehend von den Signalverlaufsdaten und den Daten über den Behälter (4) ein Abstrahlungsmaß ermittelt wird, wobei das Abstrahlungsmaß einen Anteil der Ausbreitung des mindestens einen elektromagnetischen Signals außerhalb des Innenraums (3) des Behälters (4) beschreibt.

2. Verfahren nach Anspruch 1, **dadurch gekennzeichnet, dass** ausgehend von den Signalverlaufsdaten und in Abhängigkeit von Daten über Öffnungen (10) im Behälter (4) das Abstrahlungsmaß ermittelt wird.

3. Verfahren nach Anspruch 1 oder 2, **dadurch gekennzeichnet, dass** die Neigung der Sendevorrichtung (6) relativ zum Erdschwerefeld zu einem ersten Zeitpunkt ermittelt wird, dass die Neigung der Sendevorrichtung (6) relativ zum Erdschwerefeld zu einem zweiten Zeitpunkt ermittelt wird und dass in Abhängigkeit von der zum ersten Zeitpunkt ermittelten Neigung und der zum zweiten Zeitpunkt ermittelten Neigung eine Orientierung einer Oberfläche (2) des Mediums (1) relativ zum Behälter (4) ermittelt wird.

## Claims

1. Method for determining a fill level of a medium (1) according to the radar principle, wherein at least one electromagnetic signal is emitted by a transmitting device (6) and at least one electromagnetic signal is received for the determination of the fill level, wherein an inclination of the transmitting device (6) is determined relative to the earth's gravity field at least once and wherein at least one evaluation value for determining the fill level is determined at least depending on the determined inclination,
**characterized in**
**that** signal path data are determined at least depending on the determined inclination and depending on data about the container (4), wherein the signal path data describe a propagation of the at least one electromagnetic signal in the interior (3) of the container (4), and that, based on the signal path data and the data about the container (4), a radiation measure is determined, wherein the radiation measure describes a proportion of the propagation of the at least one electromagnetic signal outside the interior (3) of the container (4).

2. Method according to claim 1, **characterized in that** the radiation measure is determined on the basis of the signal path data and in dependence on data via openings (10) in the container (4).

3. Method according to claim 1 or 2, **characterized in that** the inclination of the transmitting device (6) is determined relative to the earth's gravity field at a first point in time, that the inclination of the transmitting device (6) is determined relative to the earth's gravity field at a second point in time, and that, in dependence on the slope determined at the first point in time and the slope determined at the second point in time, an orientation of a surface (2) of the medium (1) relative to the container (4) is determined.

## Revendications

1. Procédé pour déterminer un niveau de remplissage d'un fluide (1) selon le principe du radar, dans lequel, pour déterminer le niveau de remplissage, au moins un signal électromagnétique est émis par un dispositif émetteur (6) et au moins un signal électromagnétique est reçu, dans lequel une inclinaison du dispositif émetteur (6) par rapport au champ gravitationnel terrestre est déterminée au moins une fois et dans lequel au moins une valeur d'évaluation permettant de déterminer le niveau de remplissage est déterminée au moins en fonction de l'inclinaison déterminée,
**caractérisé en ce que** des données d'évolution du signal sont déterminées au moins en fonction de l'inclinaison déterminée et en fonction de données concernant le réservoir (4), dans lequel les données d'évolution du signal décrivent une propagation dudit au moins un signal électromagnétique à l'intérieur (3) du réservoir (4), et **en ce qu'**un niveau de rayonnement est déterminé à partir des données d'évolution du signal et des données concernant le réservoir (4), dans lequel le niveau de rayonnement décrit une proportion de la propagation d'au moins un signal électromagnétique à l'extérieur de l'espace intérieur (3) du réservoir (4).

2. Procédé selon la revendication 1, **caractérisé en ce que** le niveau de rayonnement est déterminé à partir des données d'évolution du signal et en fonction des données concernant des ouvertures (10) ménagées dans le réservoir (4).

3. Procédé selon la revendication 1 ou 2, **caractérisé en ce que** l'inclinaison du dispositif d'émission (6) par rapport au champ gravitationnel terrestre est déterminée à un premier instant, **en ce que** l'inclinaison du dispositif d'émission (6) par rapport au champ gravitationnel terrestre est déterminée à un second instant et **en ce qu'**une orientation d'une surface (2) du fluide (1) par rapport au réservoir (4) est déterminée en fonction de l'inclinaison déterminée au premier instant et de l'inclinaison déterminée au second instant.
